# EUROPEAN PATENT APPLICATION

(11) **EP 4 389 697 A1**
(43) Date of publication of application: **26.06.2024**
(21) Application number: 22216665.4
(22) Date of filing: 23.12.2022
(51) Int. Cl.: C01B 3/04

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt am Main (DE); COSCIA, Antonio, 60439 Frankfurt am Main (DE)
(74) Representative: Air Liquide

(57) **Abstract**

A process (100, 200) for producing a synthesis gas product comprising hydrogen from an endothermic cracking reaction of an ammonia feedstock stream, said process comprising the following steps:
- Exhausting an effluent gas stream produced by a heating step (109, 209) and/or by a main catalytic endothermic conversion (103, 203),
- Recovering heat from said effluent gas stream in a heat recovery step (111, 211),
- Redirecting the recovered heat (113, 114, 213, 214) to at least one secondary reactor in a heat redirection step, the secondary reactor comprising a gas reaction section in which a secondary catalytic endothermic conversion of the ammonia feedstock stream is performed (104, 204),
- Transferring the redirected heat to the secondary catalytic endothermic conversion through a thermal conductive layer at least partly delimiting the gas reaction section, in a heat transfer step.

## Description

The field of the present invention is that of an apparatus for producing a synthesis gas product. The invention relates particularly to an apparatus for producing a synthesis gas product comprising hydrogen by an endothermic reaction of an ammonia feedstock stream. The invention also relates to a process for producing a synthesis gas product comprising hydrogen.

The production of a synthesis gas product comprising hydrogen by an endothermic cracking reaction of an ammonia feedstock stream can be done in a catalytic unit at elevated temperatures, generally from 400°C to 800°C. Such a unit typically comprises a metallic shell, a catalyst and an external heat source. To achieve a lowest possible CO2 footprint for the cracking process, the external heat source is provided only by a combustion of an ammonia fuel stream in a furnace. The heat is transferred to a catalyst which promotes the cracking reaction, said catalyst requiring a high quantity of heat and energy for promoting the cracking reaction. If the temperature is too low for the catalyst to promote the cracking reaction, the ammonia conversion rate is significantly decreased. The disadvantage of such process is that it requires a lot of external energy and the conversion rate of the ammonia feedstock stream may be low.

The invention proposes a for producing a synthesis gas product comprising hydrogen from an endothermic cracking reaction of an ammonia feedstock stream in which the required external energy is significantly reduced and the conversion rate of the cracking reaction is significantly improved.

The invention proposes a process for producing a synthesis gas product comprising hydrogen from an endothermic cracking reaction of an ammonia feedstock stream, said process comprising the following steps:
- Providing an ammonia feedstock stream,
- Heating a main reactor in a heating step,
- In the heated main reactor, converting a partially converted ammonia stream by a main catalytic endothermic conversion of said partially converted ammonia stream,
- Exhausting an effluent gas stream produced by the heating step and/or by the main catalytic endothermic conversion,
- Recovering heat from said effluent gas stream in a heat recovery step,
- Redirecting the recovered heat to at least one secondary reactor in a heat redirection step, the secondary reactor comprising a gas reaction section in which a secondary catalytic endothermic conversion of the ammonia feedstock stream is performed,
   - Transferring the redirected heat to the secondary catalytic endothermic conversion through a thermal conductive layer at least partly delimiting the gas reaction section, in a heat transfer step.

In this disclosure, the main catalytic endothermic conversion can also be called main catalytic conversion, and the secondary catalytic endothermic conversion may also be called secondary catalytic conversion.

In one aspect of the invention, the main catalytic endothermic conversion is a main cracking reaction of the partially converted feedstock stream.

In one aspect of the invention, the main and the secondary catalytic conversion are performed sequentially in the ammonia feedstock stream flow direction.

In one aspect of the invention, the secondary catalytic conversion is upstream the main catalytic conversion in the ammonia feedstock stream flow direction, the ammonia feedstock stream being converted by the secondary catalytic endothermic conversion into the partially converted ammonia stream, and the partially converted ammonia stream is converted by the main catalytic endothermic conversion into the synthesis gas product.

In one aspect of the invention, the partially converted ammonia stream is a pre-cracked ammonia feedstock stream.

In one aspect of the invention, the secondary catalytic conversion is a pre-cracking reaction of the ammonia feedstock stream. A pre-cracking reaction is a reaction in which the feedstock, here the ammonia feedstock stream, is cracked in advance, upstream a cracking reaction, here the main cracking reaction.

In one aspect of the invention, the secondary catalytic conversion is performed with a conversion rate similar to a conversion rate of the main catalytic, preferably the secondary catalytic conversion rate is lower than the main catalytic conversion rate.

In one aspect of the invention, the secondary catalytic conversion rate is comprised between 15% and 90%, preferably between 15% and 50%, preferably between 15% and 20%.

In one aspect of the invention, the secondary catalytic conversion is realized at a lower temperature than the main catalytic conversion.

In one aspect of the invention, the secondary catalytic conversion is performed at a temperature comprised between 350°C and 650°C, preferably around 550°C and the main catalytic conversion is performed at a temperature comprised between 600°C and 900°C, preferably between 700°C and 800°C, for example at a pressure of around 30barA. The lower temperature of the secondary catalytic conversion allows to use a different catalyst than the catalyst of the main catalytic conversion, said catalyst needing a lower temperature for acting, and thus to improve the total conversion rate of the cracking reaction.

In one aspect of the invention, the main catalytic conversion is performed in the main reactor in presence of a main catalyst and the secondary catalytic conversion is performed in the secondary reactor in presence of a secondary catalyst.

In another aspect of the invention, the secondary catalyst has a composition different from the main catalyst.

In one aspect of the invention, the main catalytic conversion and the secondary catalytic conversion are performed over separate catalysts beds.

According to one aspect of the invention, the main catalyst comprising nickel as a catalytically active material, in particular as a catalytically active material on a carrier, for example an aluminum oxide (AI2O3) carrier.

According to one aspect of the invention, the main catalyst comprises from 5 to 20 wt% of nickel, preferably around 15wt% of nickel.

According to one aspect of the invention, the secondary catalyst comprising nickel as a catalytically active material, in particular as a catalytically active material on a carrier, for example an aluminum oxide (AI2O3) carrier.

According to one aspect of the invention, the secondary catalyst comprises above 20 to above 45 wt% of nickel, preferably above 35 wt% of nickel and/or a precious metal as a catalytically active material, such as ruthenium, preferably above 1,5 wt% of ruthenium.

In one aspect of the invention, the process comprises a pre-heating step of the partially converted ammonia stream, the pre-cracking and the pre-heating steps occurring both in the secondary reactor.

According to one aspect of the invention, the pre-heating step is done entirely by the secondary reactor.

The invention proposes a process for producing a synthesis gas product comprising hydrogen from an endothermic cracking reaction of an ammonia feedstock stream, said process comprising the following steps:
- Providing an ammonia feedstock stream,
- Heating a main reactor in a heating step,
- In the heated main reactor, converting the ammonia feedstock stream by a main catalytic endothermic conversion of said ammonia feedstock stream,
- Exhausting an effluent gas stream produced by the heating step and/or by the main catalytic endothermic conversion,
- Recovering heat from said effluent gas stream in a heat recovery step,
- Redirecting the recovered heat to at least one secondary reactor in a heat redirection step, the secondary reactor comprising a gas reaction section in which a secondary catalytic endothermic conversion of the ammonia feedstock stream is performed,
   - Transferring the redirected heat to the secondary catalytic endothermic conversion through a thermal conductive layer at least partly delimiting the gas reaction section, in a heat transfer step.

In one aspect of the invention, the ammonia feedstock stream is split in at least two split ammonia feedstock streams, one of the split ammonia feedstock stream being provided to the main reactor, the other split ammonia feedstock stream being provided to the secondary reactor.

In one aspect of the invention, the secondary catalytic conversion is realized simultaneously to the main catalytic conversion.

In one aspect of the invention, the main catalytic conversion is performed with the same conversion rate as the secondary catalytic conversion.

In one aspect of the invention, the main catalytic conversion and the secondary catalytic conversion are realized at the same temperature.

In another aspect of the invention, the secondary catalytic conversion is realized at a lower temperature than the main catalytic conversion.

In one aspect of the invention, the secondary catalytic conversion and/or the main catalytic conversion is performed at a temperature comprised between 500°C and 800°C, preferably comprised between 600°C and 700°C, for example at a pressure below 30 barA, preferably at a pressure comprised between 15 barA and 20 barA.

In one aspect of the invention, the main catalytic conversion is performed in the main reactor in presence of a main catalyst and the secondary catalytic conversion is performed in the secondary reactor in presence of a secondary catalyst.

In an aspect of the invention, the secondary catalyst has the same composition as the main catalyst.

In another aspect of the invention, the secondary catalyst has a composition different from the main catalyst.

In one aspect of the invention, the main catalytic conversion and the secondary catalytic conversion are performed over separate catalysts beds.

In one aspect of the invention, the main catalyst and/or the secondary catalyst comprises nickel as a catalytically active material, for example in a range of 5 to 20 wt% of nickel, preferably around 15wt% of nickel.

In another aspect of the invention, the secondary catalyst comprises nickel as a catalytically active material, for example above 20wt% up to above 45wt% of nickel, preferably above 35wt% of nickel and/or comprises a precious metal as a catalytically active material, such as a ruthenium, preferably above 1,5 wt% of ruthenium.

In one aspect of the invention, the secondary reactor is a non-adiabatic reactor. In one aspect of the invention, the secondary reactor is an isothermal reactor. Here, an adiabatic reactor relates to a reactor performing a reaction during which no heat exchange occurs between the reaction and the external environment of the reactor. In such adiabatic reactor, in the case of an endothermic reaction, there is a decrease in temperature from the inlet to the outlet of the reactor. On the contrary, a non-adiabatic reactor is here a reactor in which heat exchanges occur between the reaction and the external environment of the reactor. In other words, the non-adiabatic reactor is arranged for the catalytic endothermic conversion of the ammonia feedstock stream and for heat exchanges. In an isothermal reactor, in the case of an endothermic reaction, there is no substantial decrease in temperature from the inlet to the outlet of the reactor.

In one aspect of the invention, the effluent gas stream comprises a flue gas stream and/or the synthesis gas product.

In one aspect of the invention, the step of exhausting the effluent gas stream comprises exhausting the effluent gas stream in an effluent gas duct configured to discharge the effluent gas stream. In particular, the heat recovery step comprises recovering heat from the flue gas stream in the effluent duct.

In one aspect of the invention, the heating step comprises combusting a fuel gas stream into the flue gas stream in a combustion reaction performed in a firing chamber.

In one aspect of the invention, the step of exhausting the effluent gas stream comprises exhausting the flue gas stream, in particular in a flue gas duct, such as an exhaust tunnel. In particular, the process comprises a step of discharging the flue gas stream from the firing chamber and the heat recovery step comprises recovering heat, in particular in the flue gas duct, from the flue gas stream discharged from the firing chamber. In one aspect of the invention, the combustion reaction is external to the main reactor.

In one aspect of the invention, the heating step comprises heating the main reactor by an electrical heating device.

In one aspect of the invention, the step of exhausting the effluent gas stream comprises exhausting the synthesis gas product, in particular exhausting the synthesis gas product in a synthesis gas conduit. In particular, the process comprises a step of discharging the synthesis gas product from the main reactor and the heat recovery step comprises recovering heat, in particular in the synthesis gas conduit, from the discharged synthesis gas product.

In one aspect of the invention, the heat recovery step and the heat redirection step are performed by convection heat transfer from the effluent gas stream to the secondary reactor.

In one aspect of the invention, the convection heat transfer occurs through the fluid movement of the effluent gas stream towards and around the secondary reactor.

In one aspect of the invention, the heat transfer step is performed by heat conduction from the effluent gas, through the thermal conductive layer, to the gas reaction section.

In one aspect of the invention, the heat from the main catalytic endothermic conversion is directed to the secondary catalytic conversion by heat exchange between at least part of the effluent gas stream and the ammonia feedstock stream to be converted the secondary reactor.

In one aspect of the invention, the heat transfer step occurs through a heat exchanger.

In one aspect of the invention, the secondary reactor is a synthesis gas heated secondary reactor and comprises a synthesis gas product circulation section arranged in a heat exchange relationship with the gas reaction section, synthesis gas product circulation section through which at least part of the synthesis gas product circulates.

According to one aspect of the invention, the synthesis gas product circulation section comprises at least one synthesis gas circulation tube. In one aspect of the invention, the heat exchanger is a fluid-fluid heat exchanger.

In one aspect of the invention, the process comprises a step of processing the synthesis gas product, for example a step of purifying the synthesis gas product.

According to one aspect of the invention, the ammonia feedstock stream comprises impurities such as sulfur, oil, chlorine and water under ppm levels. In other words, the purity level of the ammonia feedstock stream is high and does not cause impurity deposits on the catalysts.

According to one aspect of the invention, the secondary reactor is a single pass reactor. In other words, the ammonia feedstock stream circulates a single time through the gas reaction section. The filling of the secondary reactor with the catalyst is thus facilitated.

According to one aspect of the invention, the ammonia feedstock stream circulates in a single direction in the secondary reactor.

According to one aspect of the invention, the process comprises a controlling step of the fuel gas stream rate depending on the feedstock stream flow rate, a calculated reaction heat requirement and/or an outlet temperature of the main reactor.

According to one aspect of the invention, when the ammonia feedstock stream flow rate decreases, the fuel gas stream flow rate decreases. Thus, the flow rates are controlled to obtain the desired reaction temperature in the main and secondary endothermic cracking reaction and thus the desired synthesis gas product conversion rate.

According to one aspect of the invention, co-product steam production during the catalytic conversion is reduced. Preferably, co-product steam production during the catalytic conversion is avoided.

The invention also relates to an apparatus for producing synthesis gas product comprising hydrogen by an endothermic cracking reaction of an ammonia feedstock stream, said apparatus comprising:
- A main reactor arranged for producing synthesis gas product comprising hydrogen by a main endothermic catalytic conversion of a partially converted ammonia feedstock stream,
- A heating device arranged to provide heat to the main reactor,
- An effluent gas duct arranged to discharge an effluent gas stream from the main reactor and/or from the heating device,
- At least one secondary reactor comprising a gas reaction section, said gas reaction section comprising a catalyst configured to promote a secondary endothermic catalytic conversion of the ammonia feedstock stream into the partially converted ammonia feedstock stream, said gas reaction section being at least partially delimited by a thermal conductive layer arranged to recover part of the heat from the effluent gas stream in the effluent gas duct, and provide the recovered heat to the catalyst.

In one aspect of the invention, the secondary reactor is arranged upstream the main reactor in the ammonia feedstock stream flow direction.

In one aspect of the invention, the apparatus comprises a partially converted ammonia feedstock conduit arranged to discharge the partially converted ammonia feedstock from the secondary reactor and feed the main reactor with the discharged partially converted ammonia feedstock.

In one aspect of the invention, the main reactor comprises a main catalyst configured to promote the main catalytic conversion and the catalyst comprised in the secondary reactor is a secondary catalyst.

In one aspect of the invention, the main catalyst is configured to allow the main catalytic conversion of the partially converted ammonia feedstock stream at a temperature comprised between 600°C and 900°C, preferably between 700°C and 800°C, for example at a pressure of around 30barA.

In particular, the main catalyst comprises nickel as a catalytically active material, in particular as a catalytically active material on a carrier, for example an aluminum oxide (Al2O3) carrier.

According to one aspect of the invention, the main catalyst comprises from 5 to 20 wt% of nickel, preferably around 15wt% of nickel.

In one aspect of the invention, the catalyst or secondary catalyst is configured to allow the secondary catalytic conversion of the ammonia feedstock stream at a temperature comprised between 350°C and 650°C, preferably around 550°C, for example at a pressure of around 30barA.

According to one aspect of the invention, the catalyst or secondary catalyst comprises nickel as a catalytically active material, in particular as a catalytically active material on a carrier, for example an aluminum oxide (Al2O3) carrier.

According to one aspect of the invention, the catalyst or secondary catalyst comprises above 20 to above 45 wt% of nickel, preferably above 35 wt% of nickel and/or a precious metal as a catalytically active material, such as ruthenium, preferably above 1,5 wt% of ruthenium.

The invention also relates to an apparatus for producing synthesis gas product comprising hydrogen by an endothermic cracking reaction of an ammonia feedstock stream, said apparatus comprising:
- A main reactor arranged for producing synthesis gas product comprising hydrogen by a main endothermic catalytic conversion of the ammonia feedstock stream,
- A heating device arranged to provide heat to the main reactor,
- An effluent gas duct arranged to discharge an effluent gas stream from the main reactor and/or from the heating device,
- At least one secondary reactor comprising a gas reaction section, said gas reaction section comprising a catalyst configured to promote a secondary catalytic conversion of the ammonia feedstock stream into the synthesis gas product comprising hydrogen, said gas reaction section being at least partially delimited by a thermal conductive layer arranged to recover part of the heat from the effluent gas stream in the effluent gas duct, and provide the recovered heat to the catalyst.

In one aspect of the invention, the secondary reactor is fluidically arranged in parallel to the main reactor in the ammonia feedstock stream flow direction.

In one aspect of the invention, the main reactor comprises a main catalyst configured to promote the main catalytic conversion and the catalyst comprised in the secondary reactor is a secondary catalyst.

In one aspect of the invention, the main catalyst and the secondary catalyst have the same composition.

In another aspect of the invention, the main catalyst and the secondary catalyst have different compositions.

According to one aspect of the invention, the main catalyst and/or the secondary catalyst or catalyst comprises nickel as a catalytically active material, in particular as a catalytically active material on a carrier, for example an aluminum oxide (AI2O3) carrier. In particular, the main catalyst comprises from 5 to 20 wt% of nickel, preferably around 15wt% of nickel.

In one aspect of the invention, the apparatus comprises a separator arranged to split the ammonia feedstock stream into the at least two split ammonia feedstock streams.

In one aspect of the invention, the secondary reactor is a non-adiabatic reactor.

In one aspect of the invention, the apparatus comprises a feedstock conduit arranged to feed the main reactor with the ammonia feedstock.

In one aspect of the invention, the gas reaction section is delimited by a thermal conductive layer configured for heat transfers to the secondary catalytic endothermic conversion.

In one aspect of the invention, the secondary reactor comprises a heat exchanger configured for heat exchanges between the gas reaction section and the external environment.

In one aspect of the invention, the heating device comprises a firing chamber configured for the combustion of a fuel gas stream into a flue gas stream. In particular, the effluent gas duct comprises a flue gas duct configured to discharge the flue gas from the firing chamber. For example, the flue gas duct comprises an exhaust tunnel.

In one aspect of the invention, the thermal conductive layer is arranged to recover part of the heat from the flue gas stream in the flue gas duct, in particular from the flue gas stream discharged from the firing chamber.

In one aspect of the invention, the heating device comprises an electrical heating device.

In one aspect of the invention, the effluent gas duct comprises a synthesis gas conduit arranged to discharge the synthesis gas product from the main reactor.

In one aspect of the invention, the thermal conductive layer is arranged to recover part of the heat from the synthesis gas product stream in the synthesis gas conduit, in particular from the synthesis gas product stream discharged from the main reactor.

In one aspect of the invention, the at least one secondary reactor comprises a synthesis gas heated secondary reactor and the synthesis gas conduit comprise a synthesis gas product circulation section arranged in a heat exchange relationship with the gas reaction section, the gas reaction section being delimited from the synthesis gas product circulation section by the thermal conductive layer. In other words, the thermal conductive layer is arranged for heat exchanges between the ammonia feedstock stream and the synthesis gas product from the main catalytic endothermic conversion. In other words, in this embodiment, the heat exchanger is a fluid/fluid heat exchanger.

In particular, the synthesis gas product circulation section comprises at least one synthesis gas circulation tube arranged for the circulation of the synthesis gas product.

In one aspect of the invention, the thermal conductive layer comprises the wall of the synthesis gas circulation tube.

In particular, the gas reaction section comprises a shell, the shell being filled with the catalyst or secondary catalyst, the at least one synthesis gas circulation tube extending inside the shell. Preferably, a plurality of synthesis gas circulation tubes are extending inside the shell. In other words, the heat exchanger is a tube/shell heat exchanger.

In one aspect of the invention, the at least one secondary reactor comprises a flue gas heated secondary reactor. The gas reaction section comprises at least one feedstock circulation tube arranged for the circulation and reaction of the ammonia feedstock stream, said feedstock circulation tube being filled with the catalyst or secondary catalyst and arranged for exchanging heat with the flue gas discharged from the firing chamber in the flue gas duct, the feedstock circulation tube having preferably a coiled shape. In otherwords, the effluent gas circulates around the feedstock circulation tube and heat is transferred from the effluent gas to the secondary catalytic conversion.

In particular, the feedstock circulation tube extends through a circulation section of the flue gas duct and the flue gas duct is configured to distribute the flue gas stream around the feedstock circulation tube.

In particular, the feedstock circulation tube has a diameter comprised between 2 and 4 inch (0,0508 m and 0,1016 m), preferably around 3 inch (0,0762m).

In particular, the feedstock circulation tube has a length comprised between 2 and 12 meters.

In particular, the heat exchanger of the effluent gas heated secondary reactor is oriented vertically within the effluent gas stream duct.

In one aspect of the invention, the apparatus comprises at least two secondary reactors, the apparatus comprising a synthesis gas heated secondary reactor as described above and a flue gas heated secondary reactor as described above.

In one aspect of the invention, the secondary reactor comprises a feed distribution header and a collection header.

In one aspect of the invention, the feed distribution header is arranged at an extremity of the secondary reactor and the collection header is located at the opposite extremity of the secondary reactor.

In one aspect of the invention, the feed distribution header is arranged at the top extremity of the secondary reactor and the collection header is at the bottom extremity if the secondary reactor. Thus, the ammonia feedstock stream flow direction is downwards to prevent fluidization of the catalyst.

In one aspect of the invention, the feed distribution header and collection header are at the same extremity of the secondary reactor.

In one aspect of the invention, the secondary reactor is supported by one of its extremities, the other extremity of said secondary reactor being not supported. In other words, the other extremity is free and can freely expand inside the effluent gas stream duct for compensation of thermal elongation. This also reduces the need for auxiliary supports and any other suspension measures

In one aspect of the invention, the secondary reactor comprises an opening at one extremity of the heat exchanger arranged for filling the catalyst into the heat exchanger, in particular into the first gas circulation section.

In one aspect of the invention, the opening is arranged in the feed distribution header.

In one aspect of the invention, the main catalyst and/or the secondary catalyst is chosen among a pellet catalyst of a structured catalyst.

Further features, details and advantages of the invention will become more clearly apparent from reading the description given below by way of indication with reference to the drawings, in which:
[FIG. 1] is a schematic representation of the process of the invention according to a first embodiment,
[Fig. 2] is a schematic representation of the process of the invention according to a second embodiment,
[FIG. 3] is a schematic representation of the apparatus of the invention according to a first embodiment,
[FIG. 4] is a schematic representation of the apparatus of the invention according to a second embodiment,
[FIG. 5] is a schematic representation of the secondary reactor of the apparatus of figure 3 or 4 according to a first embodiment,
[FIG. 6] is a schematic representation of the secondary reactor of the apparatus of figure 3 or 4 according to a second embodiment.

It should first of all be noted that the figures disclose the invention in a detailed manner so as to implement the invention, and said figures may of course serve to define the invention more clearly, where necessary.

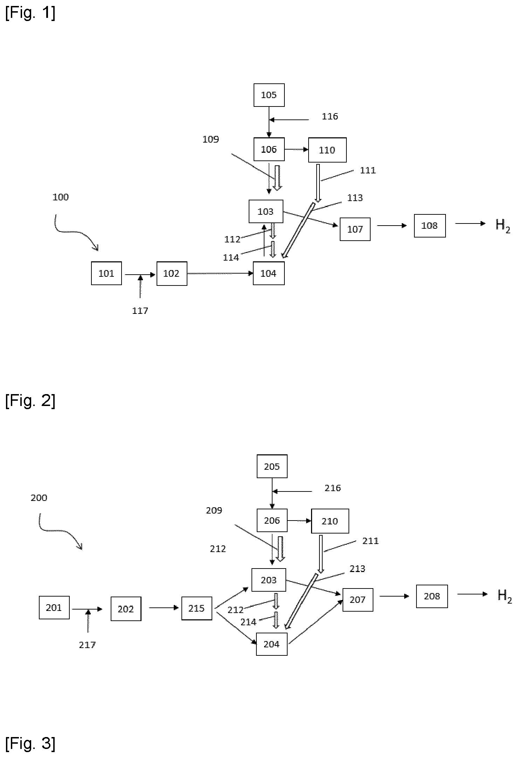

Figure 1 is a schematic representation of the process for producing a synthesis gas product comprising hydrogen from an endothermic cracking reaction of an ammonia feedstock stream of the invention according to a first embodiment. In this embodiment, the process 100 comprises the following steps:
- Providing an ammonia feedstock stream 101,
- Heating a main reactor in a heating step 109 with a combustion reaction 106 of a fuel gas stream into a combustion reaction effluent gas stream, said combustion being performed in a firing chamber,
- In the heated main reactor, converting a partially converted ammonia stream by a main catalytic endothermic conversion of a partially converted ammonia stream 103,
- Exhausting the effluent gas stream produced by the heating step 109 and/or by the main catalytic endothermic conversion 103,
- Recovering heat from said effluent gas stream in a heating recovery step 111,
- Redirecting the recovered heat 113, 114 to at least one secondary reactor in which a secondary catalytic endothermic conversion of the ammonia feedstock stream is performed 104,
- Transferring the redirected heat to the secondary catalytic endothermic conversion through a thermal conductive layer at least partly delimiting the gas reaction section, in a heat transfer step.

In this embodiment, the secondary catalytic conversion 104 is a pre-cracking reaction. In this case, the secondary catalytic conversion 104 is upstream the main catalytic conversion 103 in the ammonia feedstock stream flow direction, and the ammonia feedstock stream is converted by the secondary catalytic conversion 104 into the partially converted ammonia stream, said partially converted ammonia stream being then converted by the main catalytic endothermic conversion 103 into the synthesis gas product.

The secondary catalytic conversion 104 is here performed at a temperature comprised between 350°C and 650°C, preferably around 550°C and the main catalytic conversion 103 is performed at a temperature comprised between 600°C and 900°C, preferably between 700°C and 800°C for example at a pressure of around 30barA. The lower temperature of the secondary catalytic conversion allows to use a different catalyst than the catalyst of the main catalytic conversion, and thus to improve the field of the cracking reaction.

The conversion rate of the secondary catalytic conversion is comprised between 15% and 90%, preferably between 15% and 50%, preferably between 15% and 20%. The conversion rate of the main catalytic conversion is around 93%.

The main catalytical conversion 103 is performed in presence of an active catalyst which promotes the conversion of the partially converted ammonia stream during the cracking reaction when heat is provided 109 to said catalytical conversion. The main catalyst comprises nickel as a catalytically active material, in particular as a catalytically active material on a carrier, for example aluminum oxide (Al2O3). The main catalyst comprises from 5 to 20 wt% of nickel, preferably around 15wt% of nickel.

The secondary catalytic conversion 104 is performed in presence of a catalyst which promotes the conversion of the ammonia feedstock stream during the pre-cracking reaction into a partially converted ammonia feedstock stream. The secondary catalytic conversion is performed in the secondary reactor in presence of a catalyst comprising nickel as a catalytically active material, in particular as a catalytically active material on a carrier, for example aluminum oxide (Al2O3). The secondary catalyst comprises above 20 to above 45 wt% of nickel, preferably above 35 wt% of nickel and/or a precious metal- base catalyst, such as a ruthenium-base catalyst, preferably above 1,5 wt% of ruthenium. The use of precious metal catalysts is facilitated because the feedstock comprises mainly of ammonia with impurity level under ppm.

The secondary catalytic conversion is performed in a secondary reactor, here an effluent gas heated secondary reactor, which is disposed in an effluent gas duct, said effluent gas stream duct being configured to discharge the effluent gas stream and to distribute the effluent gas stream around the effluent gas heated secondary reactor for recovering 111 directing 113 heat from said effluent gas duct to the secondary catalytic conversion 104.

Following the main catalytic conversion 104, the synthesis gas product comprises hydrogen, nitrogen and a portion of unconverted ammonia feedstock. The synthesis gas product is hot due to the heat provided to the catalytical reaction. The process comprises here a step of recovering heat from the synthesis gas product 112 and a directing step 114 of the recovered heat from the synthesis gas product to the secondary catalytic conversion 104 in another secondary reactor called synthesis gas heated secondary reactor. During this step, the synthesis gas product circulates in the synthesis gas heated secondary reactor and exchanges heat with the ammonia feedstock stream which also circulates in said synthesis gas heated secondary reactor. For example, the synthesis gas product circulates in a first section of a heat exchanger comprised in the synthesis gas product of the secondary reactor, the ammonia feedstock stream circulates in another section of said heat exchanger, said first and second sections being separated by a thermal conductive layer allowing heat exchanges between the two fluids. Thanks to these steps, the quantity of effluent gas needed can be reduced.

The process of the invention here comprises a secondary reaction that is performed in the synthesis gas heated secondary reactor comprising a heat exchanger for exchanging heat between the synthesis gas product and the ammonia feedstock stream, and a secondary reaction that is performed in the effluent gas heated secondary reactor arranged for heat exchanges between the effluent gas stream circulating in the effluent gas stream duct and the ammonia feedstock stream.

The process can also comprise a controlling step of the fuel gas stream rate depending on the feedstock stream flow rate. When the ammonia feedstock stream flow rate decreases, the fuel gas stream flow rate decreases too. Thus, the flow rates are controlled to obtain the desired temperature in the main and secondary catalytic conversion and thus the desired synthesis gas product rate.

The process 100 comprises also a step of conditioning the ammonia feedstock stream 102, for example a vaporization step of the ammonia feedstock stream.

The process 100 can also comprise a step of discharging the synthesis gas product 107. During this step, the synthesis gas product is discharged from the reactor in which the catalytical reaction occurs to be treated in a processing step 108 if needed. For example, this processing step can be a purification step. This purification step uses classical purification methods, such as PSA, cryogenic separation, membranes, TSA. Purified hydrogen is thus obtained.

Figure 2 is a schematic representation of the process for producing a synthesis gas product comprising hydrogen from an endothermic cracking reaction of an ammonia feedstock stream of the invention according to a first embodiment. In this embodiment, the process 200 comprises the following steps:
- Providing an ammonia feedstock stream 201,
- Heating a main reactor in a heating step 209, here with a combustion reaction 206 of a fuel gas stream into a combustion reaction effluent gas stream, said combustion being performed in a firing chamber,
- In the main reactor, converting an ammonia stream by a main catalytic endothermic conversion of the ammonia feedstock stream 203,
- Exhausting an effluent gas stream 210 produced by the heating step 209 and/or by the main catalytic endothermic conversion 203,
- Recovering heat from said effluent gas stream in a heat recovery step 211
- Redirecting the recovered heat 213, 214 to at least one secondary reactor in a heat redirection step, the secondary reactor comprising a gas reaction section in which a secondary catalytic endothermic conversion of the ammonia feedstock stream is performed,
- Transferring the redirected heat to the secondary catalytic endothermic conversion through a thermal conductive layer at least partly delimiting the gas reaction section, in a heat transfer step.

In this embodiment, the secondary catalytic conversion 204 is performed parallelly to the main catalytic conversion 203. In this case, the ammonia feedstock stream is split 215 in two split ammonia feedstock streams, one of the split ammonia feedstock stream being provided to the main reactor for the main catalytic endothermic conversion 203, the other split ammonia feedstock stream being provided to the secondary reactor for the secondary catalytic endothermic conversion 204. The secondary catalytic conversion 204 is realized simultaneously to the main catalytic conversion 203. Then, the ammonia feedstock stream is converted by the main 203 and the secondary 204 catalytic conversions into the synthesis gas product.

In this case, the main catalytic conversion 203 can be performed at the same temperature as the secondary catalytic conversion 204. It is also possible to perform the main catalytic conversion 203 at a different temperature than the secondary catalytic conversion 204. The main catalytic conversion 203 and the secondary catalytic conversion 204 can be performed in the presence of the same catalyst, or a different catalyst. The catalyst is for example a catalyst comprising nickel as a catalytically active material, in particular as a catalytically active material on a carrier, for example aluminum oxide (Al2O3). For example, the catalyst comprises from 5 to 20 wt% of nickel, preferably around 15wt% of nickel. Preferably, the conversion rate of the secondary catalytic conversion 204 and the main catalytic conversion 203 are similar.

The secondary catalytic conversion 204 and the main catalytic conversion 203 are here performed at a temperature comprised between 600 and 700°C.

The secondary catalytic conversion is performed in a secondary reactor called effluent gas heated secondary reactor which is disposed in the effluent gas duct, said effluent gas duct being configured to discharge the effluent gas stream, and to distribute the effluent gas stream around the effluent gas heated secondary reactor for recovering 211 directing 213 heat from said effluent gas stream duct to the secondary catalytic conversion 204.

Following the main catalytic conversion 204, the synthesis gas product comprises hydrogen, nitrogen and a portion of unconverted ammonia feedstock. The synthesis gas product is hot due to the heat provided to the catalytical reaction. The process comprises recovering heat from said synthesis gas product 212 and a directing step 214 of the recovered heat from the synthesis gas product to the secondary catalytic conversion 204 in another secondary reactor called synthesis gas heated secondary reactor. During this step, the synthesis gas product circulates in the synthesis gas heated secondary reactor and exchanged heat with the ammonia feedstock stream which also circulates in said synthesis gas heated secondary reactor. For example, the synthesis gas product circulates in a first section of a heat exchanger comprised in the synthesis gas heated secondary reactor, the ammonia feedstock stream circulates in another section of said heat exchanger, said first and second sections being separated by a thermal conductive layer allowing heat exchanges between the two fluids. Thanks to these steps, the quantity of effluent gas needed can be reduced.

The process of the invention here comprises a secondary reaction that is performed in the synthesis gas heated secondary reactor comprising a heat exchanger for exchanging heat between the synthesis gas product and the ammonia feedstock stream, and a secondary reaction that is performed in the effluent gas heated secondary reactor arranged for heat exchanges between the effluent gas stream and the ammonia feedstock stream.

The process can also comprise a controlling step of the fuel gas stream rate depending on the feedstock stream flow rate. When the ammonia feedstock stream flow rate decreases, the fuel gas stream flow rate decreases too. Thus, the flow rates are controlled to obtain the desired temperature in the main and secondary endothermic cracking reaction and thus the desired synthesis gas product rate.

The process 200 comprises also a step of conditioning the ammonia feedstock stream 202, for example a vaporization step of the ammonia feedstock stream.

The process 200 can also comprise a step of discharging the synthesis gas product 207. During this step, the synthesis gas product is discharged from the main and the secondary reactors in which the catalytical reactions occur to be treated in a processing step 208 if needed. For example, this processing step can be a purification step. This purification step uses classical purification methods, such as PSA, cryogenic separation, membranes, TSA. Purified hydrogen is thus obtained.

Figure 3 is a schematic representation of an apparatus according to a first embodiment.

In this embodiment, the apparatus 1 for producing synthesis gas product comprising hydrogen by an endothermic cracking reaction of an ammonia feedstock stream, said apparatus comprising:
- A main reactor 2 arranged for producing synthesis gas product comprising hydrogen by a main endothermic catalytic conversion of a partially converted ammonia feedstock stream,
- A heating device, here a firing chamber 4, arranged to provide heat to the main reactor 2,
- A effluent gas duct 5, 23 arranged to discharge the effluent gas stream from the main reactor and/or from the heating device,
- At least one secondary reactor 3a, 3b comprising a gas reaction section 19, 21, arranged for producing a partially converted ammonia feedstock stream by a secondary endothermic catalytic conversion of the ammonia feedstock stream, said gas reaction section 19, 21, being at least partially delimited by a thermal conductive layer 20, 22 arranged to recover part of the heat from the effluent gas stream in the effluent gas duct 5, 23, and provide the recovered heat to the secondary catalytic conversion, said gas reaction section 19, 21 comprising a catalyst configured to promote the secondary catalytic conversion of the ammonia feedstock stream.

In this embodiment, the secondary reactors 3a, 3b are arranged upstream the main reactor 2 in the ammonia feedstock stream flow direction. The apparatus 1 comprises an ammonia feedstock stream inlet 9 arranged for the inlet of the ammonia feedstock stream. The apparatus 1 comprises a partially converted ammonia feedstock stream duct 14 arranged to distribute the partially converted ammonia feedstock stream from the secondary catalytic conversion, here a pre-cracking reaction, performed in the secondary reactors 3a, 3b to the main reactor 2. A synthesis gas product duct 15 is arranged to discharge the synthesis gas product from the main reactor 2.

The secondary reactor 3a, 3b are here non-adiabatic reactors.

The synthesis gas heated secondary reactor 3a comprises a heat exchanger 8 arranged for heat exchanges between the synthesis gas product from the main catalytic conversion and the feedstock gas stream circulating inside the secondary reactor 3. Here, the effluent gas duct comprises a synthesis gas conduit 23 arranged to discharge the synthesis gas product from the main reactor 2. In other words, the effluent gas comprises the synthesis gas product. The heat from the synthesis gas product is thus transferred to the secondary reactor 8. For example, the heat exchanger 8 of the synthesis gas secondary reactor 3a can be a fluid/fluid heat exchanger 8. In this case, the heat exchanger 8 comprises a section configured for the circulation of the ammonia feedstock stream, the heat exchanger comprises another section configured for the circulation of the synthesis gas product from the main catalytic conversion, said sections being separated by a thermal conductive layer arranged for the heat exchanges between the ammonia feedstock stream and the synthesis gas product from the main catalytic conversion. The heat exchanger 8 can be for example a tube and shell heat exchanger. The heat exchanger comprises a synthesis gas conduit arranged for the circulation of the synthesis gas product, and a shell forming a duct for the circulation of the ammonia feedstock stream.

The apparatus comprises a firing chamber 2, said firing chamber comprising a combustion zone 12 in which a combustion of the fuel gas stream into a combustion reaction effluent gas is performed. A fuel gas inlet 10 is configured for the inlet of the fuel gas in the firing chamber 2. An effluent gas duct comprises a flue gas duct 5 arranged for discharging and to distribute said effluent, here a flue gas stream, around an effluent gas heated secondary reactor 3b. The effluent gas heated secondary reactor 3b is arranged vertically inside the effluent gas stream duct 5.

The apparatus comprises two partially converted ammonia feedstock conduits 24a, 24b arranged to discharge the partially converted ammonia feedstock from the secondary reactor and feed the main reactor with the discharged partially converted ammonia feedstock.

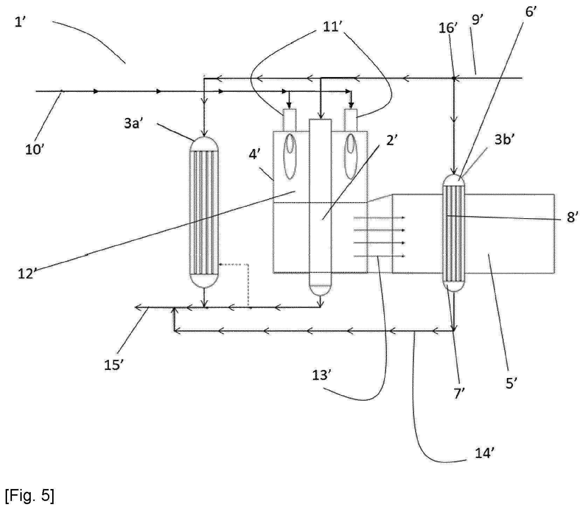

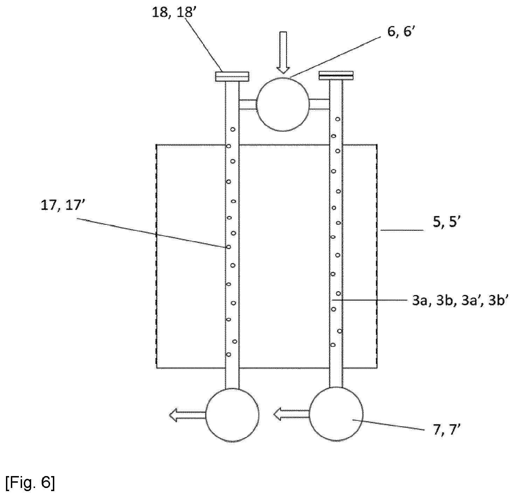

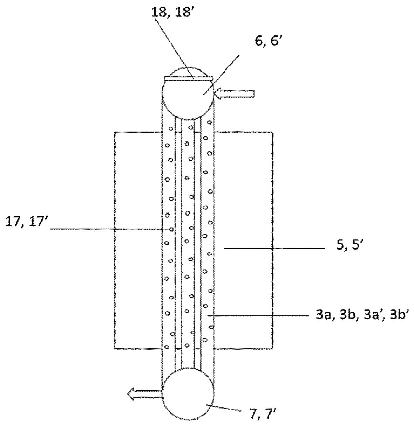

The secondary reactors 3a, 3b comprise a feed distribution header 6 and a partially converted ammonia feedstock stream collection header 7 which will be disclosed in figures 5 and 6.

The main reactor 2 comprises a catalyst configured to promote the catalytic conversion of the partially converted ammonia feedstock stream at a temperature comprised between 350°C and 650°C, preferably around 550°C.

The secondary reactors 3a, 3b are filled with a catalyst comprising nickel as a catalytically active material, in particular as a catalytically active material on a carrier, for example aluminum oxide (Al2O3). The secondary catalyst comprises above 20 to above 45 wt% of nickel, preferably above 35 wt% of nickel and/or a catalyst comprising precious metal, such as a ruthenium, preferably above 1,5 wt% of ruthenium, as a catalytically active material, in particular as a catalytically active material on a carrier.

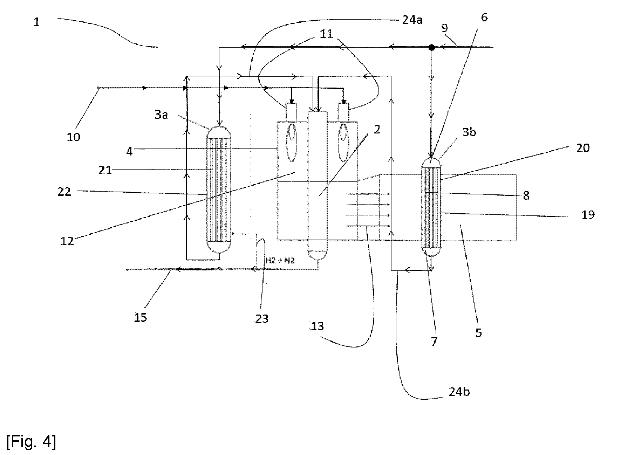

Figure 4 is a schematic representation of an apparatus according to a second embodiment.

In this embodiment, the apparatus 1' for producing synthesis gas product comprising hydrogen by an endothermic cracking reaction of an ammonia feedstock stream, said apparatus comprising:
- A main reactor 2' arranged for producing synthesis gas product comprising hydrogen by a main endothermic catalytic conversion of the ammonia feedstock stream,
- A heating device, here a firing chamber 4' arranged to provide heat to the main reactor 2',
- A effluent gas duct 5' arranged to discharge the effluent gas stream from main reactor 2' and/or from the heating device 4',
- At least one secondary reactor 3a, 3b comprising a gas reaction section 19' 21' arranged for producing the synthesis gas product comprising hydrogen by a secondary endothermic catalytic conversion of the ammonia feedstock stream, said gas reaction section 19' 21' being at least partially delimited by a thermal conductive layer 20', 22' arranged to recover part of the heat from the effluent gas stream in the effluent gas duct, and provide the recovered heat to the secondary catalytic conversion, said gas reaction section 19' 21' comprising a catalyst configured to promote the secondary catalytic conversion of the ammonia feedstock stream.

In this embodiment, the secondary reactors 3a', 3b' are fluidically arranged parallelly to the main reactor 2' in the ammonia feedstock stream flow direction. The apparatus comprises an ammonia feedstock stream inlet 9' arranged for the inlet of the ammonia feedstock stream. The apparatus 1' comprises a first synthesis gas product duct 14' arranged to discharge the synthesis gas product from the secondary reactors 3a', 3b' to the main unit 2'. A synthesis gas product duct 15' is arranged to discharge the synthesis gas product from the main reactor 2'.

The secondary reactors 3a', 3b' are here a non-adiabatic reactor.

The synthesis gas heated secondary reactor 3a' comprises a heat exchanger 8' arranged for heat exchanges between the synthesis gas product from the main catalytic conversion and the feedstock gas stream circulating in the secondary reactor 3a'. Here, the effluent gas duct comprises a synthesis gas conduit 23' arranged to discharge the synthesis gas product from the main reactor 2'. In other words, the effluent gas comprises the synthesis gas product. The heat from the synthesis gas conduct is thus transferred to the secondary reactor 8'. For example, the heat exchanger 8' of the synthesis gas heated secondary reactor 3a' can be a fluid/fluid heat exchanger 8'. In this case, the heat exchanger 8' comprises a section configured for the circulation of the ammonia feedstock stream circulates, the heat exchanger comprises another section configured for the circulation of the synthesis gas product from the main catalytic conversion, said sections being separated by a thermal conductive layer arranged for the heat exchange between the ammonia feedstock stream and the synthesis gas product from the main catalytic conversion. The heat exchanger 8' can be for example a tube and shell heat exchanger as explained in figure 3.

The apparatus 1' comprises a split zone 16' of the ammonia feedstock stream arranged to split the ammonia feedstock stream into at least two split ammonia feedstock streams, one of the split ammonia feedstock streams being distributed to the main reactor 2', the other one to the secondary reactor 3a', 3b'.

The apparatus comprises a firing chamber 2', said firing chamber comprising a combustion zone 12' in which a combustion of the fuel gas stream into a combustion flue gas is performed. A fuel gas inlet 10' is configured to inlet the fuel gas stream into the firing chamber. A fuel gas duct is arranged to distribute the fuel gas from the fuel gas inlet 10' to the firing chamber 4'. The combustion generates heat which is directed to the main reactor 2' for the main catalytic conversion.

The apparatus comprises an effluent gas duct 5' comprising a flue gas duct 5' arranged for discharging and distributing the effluent gas stream, here a flue gas stream, from the firing chamber around the effluent gas heated secondary reactor 3b'. The effluent gas heated secondary reactor 3b' is arranged vertically inside the effluent gas stream duct 5'.

The secondary reactors 3a', 3b' comprise a feed distribution header 6' and a synthesis gas product collection header 7' which will be disclosed in figures 5 and 6.

The main 2' and the secondary reactors 3a', 3b' comprise a catalyst configured to promote the main and secondary catalytic conversion of the ammonia feedstock stream at a temperature comprised between 600°C and 900°C, preferably between 700°C and 800°C for example at a pressure of comprised between 15 and 20barA. The main reactor 2' and the secondary reactor 3a', 3b' are filled with a catalyst having the same composition.

The secondary reactor 3a', 3b' is filled with a catalyst comprising nickel as a catalytically active material in a range of 5 to 20 wt% of nickel, preferably around 15wt% of nickel and/or a catalyst comprising a precious metal such as a ruthenium, preferably above 1,5 wt% of ruthenium, as a catalytically active material.

Figure 5 and 6 is a schematic representation of a secondary reactor in the apparatus according to figure 3 or 4. The secondary reactor 3a, 3b, 3a' 3b' is here disposed in the effluent gas duct 5, 5'. In another embodiment, the secondary reactor is not disposed in a effluent gas stream duct.

The secondary reactor 3a, 3b, 3a', 3b'comprises a feed distribution header 6, 6' and a collection header 7, 7'. The secondary reactor is filled with a catalyst 17, 17'. The secondary reactor 3a, 3b, 3a', 3b' comprises a heat exchanger 8, 8' which can be a coil exchanger of a fluid-fluid heat exchanger. The heat exchanger comprises here two tubes (figure 5) or three tubes (figure 6). The heat exchanger tubes have a diameter comprised between 1 to 3 inches and a length comprised between 2 and 12 meters.

The feed distribution headers, 6' is arranged at an extremity of the secondary reactor 3a, 3b, 3a', 3b' and the collection header 7, 7' is located at the opposite extremity of the secondary reactor 3a, 3b, 3a', 3b'. The feed distribution header 6, 6' is arranged at the top extremity of the secondary reactor 3a, 3b, 3a', 3b' and the collection header 7, 7' is at the bottom extremity if the secondary reactor 3a, 3b 3a', 3b'. Thus, the ammonia feedstock stream flows direction is downwards to prevent fluidization of the catalyst 17, 17'.

In the figure 5 and 6, the secondary reactor 3a, 3a', 3a', 3b' is supported by one of its extremities, the other extremity being not supported. In other words, the other extremity is free and can freely expand inside the effluent gas stream duct for compensation of thermal elongation. This reduces the need for auxiliary supports and any other suspension measures.

In the figure 5, the secondary reactor 3a, 3b, 3a', 3b' comprises an opening 18, 18' arranged for filling the catalyst into the secondary reactor 3, 3'. The opening 18, 18' is arranged in the feed distribution header 6, 6'.

In the figure 6, the secondary reactor 3a, 3b, 3a', 3b' comprises two openings 18, 18' at one extremity of the heat exchanger, said openings 18, 18' being arranged for filling the catalyst into the secondary reactor 3a, 3b, 3a', 3b'.

## Claims

1. A process (100, 200) for producing a synthesis gas product comprising hydrogen from an endothermic cracking reaction of an ammonia feedstock stream, said process comprising the following steps:
- Providing an ammonia feedstock stream (101, 201),
- Heating a main reactor in a heating step (109, 209),
- In the heated main reactor, converting the ammonia feedstock stream or a partially converted ammonia stream by a main catalytic endothermic conversion of said ammonia feedstock stream or of said partially converted ammonia stream (103, 203),
- Exhausting an effluent gas stream produced by the heating step (109, 209) and/or by the main catalytic endothermic conversion (103, 203),
- Recovering heat from said effluent gas stream in a heat recovery step (111, 211),
- Redirecting the recovered heat (113, 114, 213, 214) to at least one secondary reactor in a heat redirection step, the secondary reactor comprising a gas reaction section in which a secondary catalytic endothermic conversion of the ammonia feedstock stream is performed (104, 204),
- Transferring the redirected heat to the secondary catalytic endothermic conversion through a thermal conductive layer at least partly delimiting the gas reaction section, in a heat transfer step.

2. A process (100) according to claim 1, wherein the secondary catalytic conversion (104) is upstream the main catalytic conversion in the ammonia feedstock stream flow direction, the ammonia feedstock stream being converted by the secondary catalytic endothermic conversion into the partially converted ammonia stream, and the partially converted ammonia stream is converted by the main catalytic endothermic conversion into the synthesis gas product.

3. A process (100) according to any of claims 1 or 2, wherein the secondary catalytic conversion (104) is performed at a temperature comprised between 350°C and 650°C, preferably around 550°C and the main catalytic conversion is performed at a temperature comprised between 600°C and 900°C, preferably between 700°C and 800°C for example at a pressure of around 30barA.

4. A process (100) according to any of claims 1 to 3, wherein the main catalytic conversion (103) is performed in the main reactor in presence of a main catalyst and the secondary catalytic conversion is performed in the secondary reactor in presence of a secondary catalyst.

5. An apparatus (1, 1) for producing synthesis gas product comprising hydrogen by an endothermic cracking reaction of an ammonia feedstock stream, said apparatus comprising:
- A main reactor (2, 2') arranged for producing synthesis gas product comprising hydrogen by a main endothermic catalytic conversion of the ammonia feedstock stream or of a partially converted ammonia stream,
- A heating device (4, 4') arranged to provide heat to the main reactor,
- An effluent gas duct (5, 5', 23, 23') arranged to discharge an effluent gas stream from the main reactor (2, 2') and/or from the heating device (4, 4'),
- At least one secondary reactor (3a, 3b, 3a', 3b') comprising a gas reaction section (19, 21, 19' 21'), said gas reaction section (19, 21, 19' 21') comprising a catalyst configured to promote a secondary catalytic conversion of the ammonia feedstock stream into the synthesis gas product or into the partially converted ammonia stream, said gas reaction section (19, 21, 19' 21') being at least partially delimited by a thermal conductive layer (20, 22, 20', 22') arranged to recover part of the heat from the effluent gas stream in the effluent gas duct, and provide the recovered heat to the catalyst.

6. An apparatus (1) according to claim 5, wherein the secondary reactor (3a, 3b) is arranged upstream the main reactor (2) in the ammonia feedstock stream flow direction.

7. An apparatus (1) according to any of claim 5 or 6, wherein the apparatus comprises a partially converted ammonia feedstock conduit (24a, 24b) arranged to discharge the partially converted ammonia feedstock from the secondary reactor (3a, 3b) and feed the main reactor with the discharged partially converted ammonia feedstock.

8. An apparatus (1) according to any of claims 5 to 7, wherein the main reactor comprises a main catalyst configured to promote the main catalytic conversion and the catalyst comprised in the secondary reactor is a secondary catalyst and the main catalyst (2) is configured to allow the main catalytic conversion of the partially converted ammonia feedstock stream at a temperature comprised between 600°C and 900°C, preferably between 700°C and 800°C for example at a pressure of around 30barA.

9. An apparatus (1) according to any of claims 5 to 8, wherein the catalyst (3a, 3b) is configured to allow the secondary catalytic conversion of the ammonia feedstock stream at a temperature comprised between 350°C and 650°C, preferably around 550°C, for example at a pressure of around 30barA.

10. An apparatus (1) according to any of claims 5 to 9, wherein the catalyst comprises above 20 to above 45 wt% of nickel, preferably above 35 wt% of nickel and/or a precious metal as a catalytically active material, such as ruthenium, preferably above 1,5 wt% of ruthenium.

11. An apparatus (1) according to any of claims 5 to 10, wherein the effluent gas duct comprises a synthesis gas conduit arranged to discharge the synthesis gas product from the main reactor and the at least one secondary reactor comprises a synthesis gas heated secondary reactor (3a, 3a') and the synthesis gas conduit comprises a synthesis gas product circulation section arranged in a heat exchange relationship with the gas reaction section, the gas reaction section being delimited from the synthesis gas product circulation section by the thermal conductive layer.

12. An apparatus (1) according to any of claims 5 to 11, wherein the heating device comprises a firing chamber (4, 4') configured for the combustion of a fuel gas stream into a flue gas stream and the effluent gas duct comprises a flue gas duct (5, 5') configured to discharge the flue gas from the firing chamber (4, 4').

13. An apparatus (1) according to the previous claim, wherein the at least one secondary reactor comprises a flue gas heated secondary reactor (3b, 3b') and the gas reaction section comprises at least one feedstock circulation tube arranged for the circulation and reaction of the ammonia feedstock stream, said feedstock circulation tube being filled with the catalyst and arranged for exchanging heat with the flue gas discharged from the firing chamber in the flue gas duct (5, 5'), the feedstock circulation tube having preferably a coiled shape.

14. An apparatus (1) according to the previous claim, wherein the feedstock circulation tube extends through a circulation section of the flue gas duct (5, 5') and the flue gas duct (5, 5') is configured to distribute the flue gas stream around the feedstock circulation tube.

15. An apparatus (1) according to any of claims 13 or 14 and according to claim 11, the apparatus comprising at least two secondary reactors, one secondary reactor being a flue gas heated secondary reactor as in any of claim 13 or 14, another secondary reactor being a synthesis gas heated secondary reactor as in claim 11.
